Europäisches Patentamt

European Patent Office

Office européen des brevets

(11) Veröffentlichungsnummer: **0 295 378 B1**

# EUROPÄISCHE PATENTSCHRIFT

(45) Veröffentlichungstag der Patentschrift: **22.07.92**

(51) Int. Cl.⁵: **B62D 1/19**

(21) Anmeldenummer: **88105790.5**

(22) Anmeldetag: **12.04.88**

(54) **Lenksäulenbefestigung für ein Kraftfahrzeug mit einem Deformationselement.**

(30) Priorität: **19.06.87 DE 3720320**

(43) Veröffentlichungstag der Anmeldung:
**21.12.88 Patentblatt 88/51**

(45) Bekanntmachung des Hinweises auf die Patenterteilung:
**22.07.92 Patentblatt 92/30**

(84) Benannte Vertragsstaaten:
**DE ES FR GB IT SE**

(56) Entgegenhaltungen:
**DE-A- 2 814 145**
**DE-A- 3 616 246**
**FR-A- 2 284 500**
**US-A- 3 769 851**
**US-A- 3 868 864**

(73) Patentinhaber: **Dr.Ing.h.c. F. Porsche Aktiengesellschaft**
**Porschestrasse 42**
**W-7000 Stuttgart 40(DE)**

(72) Erfinder: **Wierschem, Franz-Rudolf, Dipl.-Ing.
FH**
**Habichstrasse 8**
**W-7251 Weissach(DE)**
Erfinder: **Schittenhelm, Helge**
**Bismarckstrasse 75**
**W-7251 Weissach(DE)**
Erfinder: **Hoffmann, Martin**
**Hirsauer Strasse 61**
**W-7143 Vaihingen-Aurich(DE)**
Erfinder: **Eichhorn, Horst, Dipl.-Ing. FH**
**Schillerstrasse 37**
**W-7146 Tamm(DE)**

EP 0 295 378 B1

## Beschreibung

Die Erfindung betrifft eine Lenksäulenbefestigung nach dem Oberbegriff des Anspruchs 1.

Eine derartige Lenksäulenbefestigung ist aus der DE-A-2 814 145 bekannt, die ein Deformationselement für eine Lenksäule zeigt, das ein Dämpfungselement mit verformungserleichternden Öffnungen und einen mit diesem Element zusammenwirkenden Verdrängungsbolzen umfaßt. Dieser ist an der Lenkkonsole befestigt und ragt durch das Dämpfungselement und wird über einen Abstandshalter mit dem Dämpfungselement verbunden. Bei einem Stoß auf das Lenkrad verformt sich das Dämpfungselement, indem der Bolzen unmittelbar eine Kraft auf dieses Element ausübt.

Die Aufgabe der Erfindung ist es, ein verbessertes Deformationselement zu schaffen, das eine Konstruktion aus wenigen und einfach zu fertigenden Einzelteilen umfaßt und eine sichere aufbauseitige Befestigung der Lenksäule sowie eine definierte Energieaufnahme bei einem Crash gewährleistet.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung erzielten Vorteile bestehen darin, daß durch die Einspannung der energieabsorbierenden Platten zwischen einem Führungselement und einem Abstützelement erreicht wird, daß sich in Längsrichtung der Schlitze von beiden Elementen geführte Reißzonen in den Platten bilden. Bei einer nicht von beiden Seiten eingespannten energieabsorbierenden Platte, können in nachteiliger Weise die seitlich verbleibenden Zungen der Platte wegreißen, so daß ein gleichmäßiges Aufreißen entlang der Längsschlitze nicht mehr möglich ist und kein gewünschtes Deformationsverhalten erzielt wird.

Auch wird die Reibung zwischen den feststehenden Teilen und den beweglichen Teilen des Deformationselements durch die Zwischenschaltung einer Gleitschicht verbessert.

Durch eine breitere Ausführung der Längsschlitze im Abstützelement des Bügels als im Führungselement wird erreicht, daß sich die Verdrängungsbolzen beim Verschieben des Bügels in diesem nicht verklemmen können und daß das aufgerissene Material der Platte sich in den breiteren Schlitz ausbreiten kann, so daß keine Verklemmung verursacht wird.

Ein Ausführungsbeispiel der Erfindung ist in der Zeichnung dargestellt und wird im folgenden näher beschrieben.

Es zeigen:

Fig. 1    eine Seitenansicht einer Lenksäulenbefestigung mit einem Deformationselement,

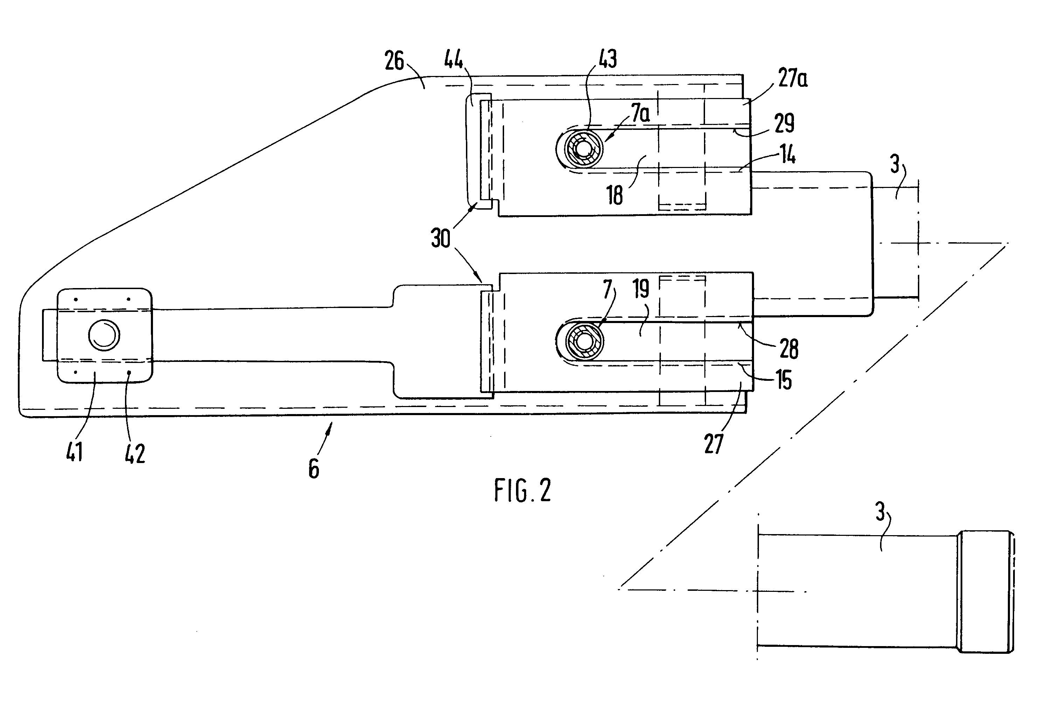

Fig. 2    einen Schnitt nach der Linie II-II der Fig. 1,

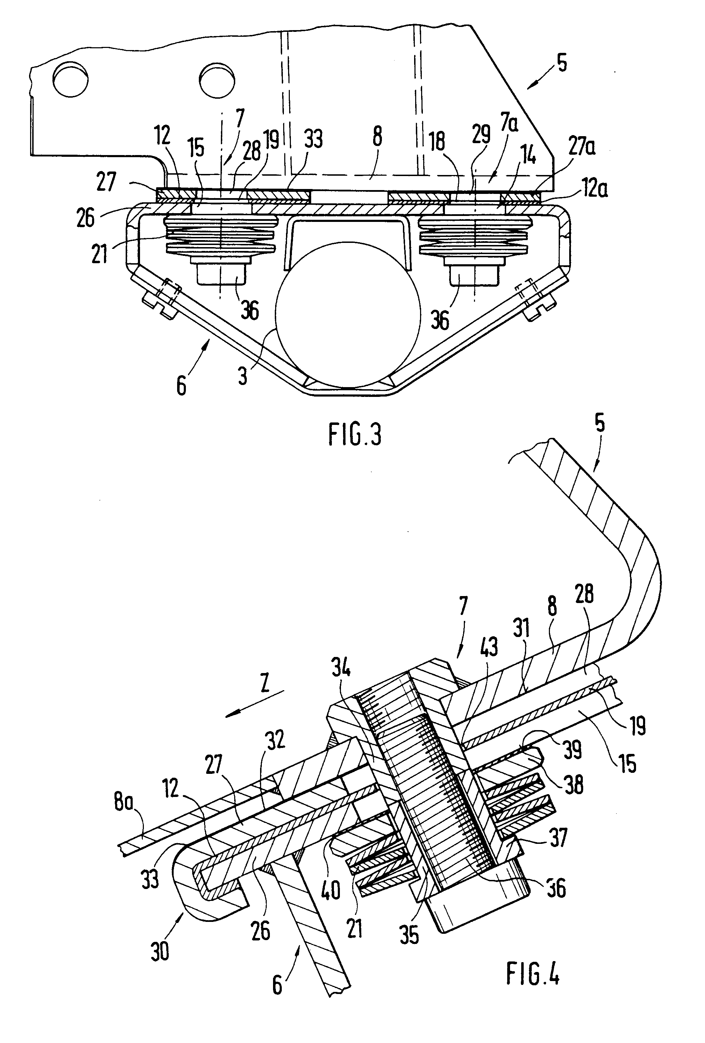

Fig. 3    eine Ansicht in Pfeilrichtung X der Fig. 1 teilweise im Schnitt,

Fig. 4    eine gegenüber Fig. 1 vergrößerte Darstellung des Deformationselements im Schnitt in den Umrissen der strichpunktierten Linie gemäß Fig. 1,

Fig. 5    eine Draufsicht auf ein Führungselement,

Fig. 6    einen Schnitt nach der Linie VI-VI der Fig. 5

Fig. 7    einen Schnitt durch eine energieabsorbierende Platte und

Fig. 8    eine weitere Ausführung von Platten zur gestuften Deformation

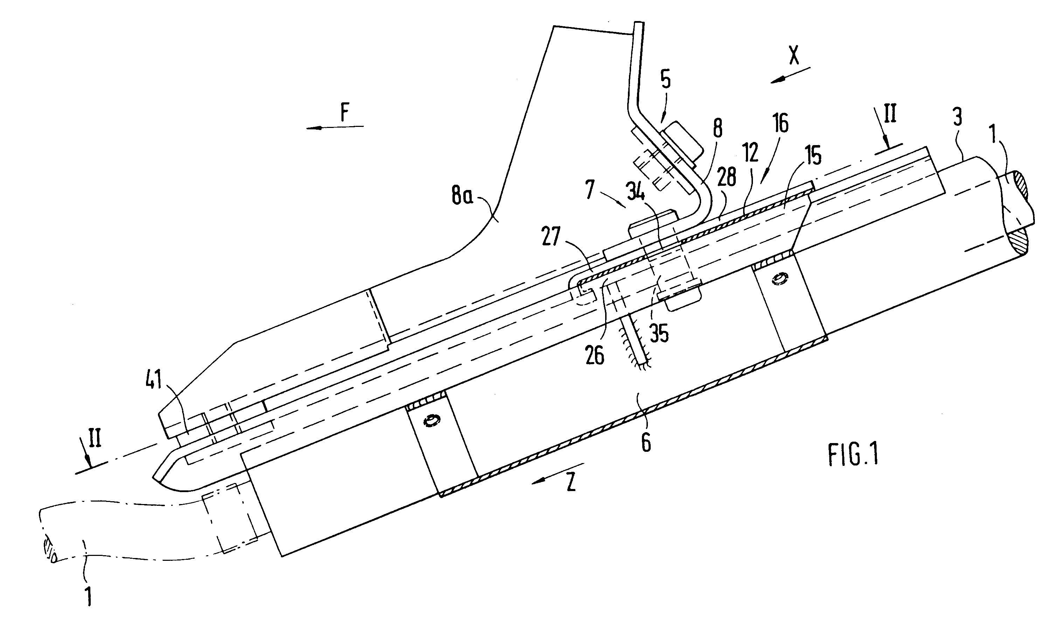

Wie in Fig. 1 dargestellt, ist in einem Lenkschutzrohr 3 eine Lenkwelle 1 gelagert, die endseitig mit einem Lenkrad verbunden ist. Die Lenkwelle 1 mit dem Lenkschutzrohr 3 ist gegenüber dem Fahrzeugaufbau 5 in Pfeilrichtung Z im Deformationselement 16 verschiebbar gehalten. Vom Aufbau 5 ist eine Lenkkonsole 8 gezeigt, die mit einer sich in Langsrichtung des Lenkschutzrohres 3 erstreckenden weiteren Aufbauteil 8a verbunden ist. An diesem stützt sich ein, das Deformationselement 16 aufnehmender und mit dem Lenkschutzrohr 3 verbundener Bügel 6 ab. Er erstreckt in einem Bereich vor der Lenkkonsole 8 und bis zum freien Ende des weiteren Aufbauteiles 8a. Endseitig des Bügels 6 ist dieses Teil 8a in einem aufbauseitig festgelegten Gleitstein 41 längsverschiebbar geführt, wie Fig. 1 näher zeigt.

Das Deformationselement 16 umfaßt zwei energieaufnehmende Platten 12 und 12a, die zwischen einem Abstützelement 26 des Bügels 6 und zwei Führungselementen 27 und 27a gehalten sind, die an einer Unterfläche 31 der Lenkkonsole 8 anliegend sind. Statt zwei energieabsorbierenden Platten 12, 12a ist auch nur eine durchgehende Platte möglich. Eine Verbindung zwischen dem Bügel 6 und der aufbauseitigen Lenkkonsole 8 unter Zwischenschaltung des Deformationselements 16 erfolgt über Verdrängungsbolzen 7 und 7a sowie über den Gleitstein 41, der zusätzlich über Kunststoffstifte 42 mit dem Bügel 6 verbunden wird und in dem das Aufbauteil 8a verschiebbar ist.

Die Führungselemente 27 und 27a sowie die die Energie aufnehmenden Platten 12 und 12a sind an einem Ende 30 hakenartig abgebogen und umkrallen zum Zwecke des Festsetzens gemeinsam - in Fahrtrichtung F gesehen - eine vordere Stirnseite des Abstützelements 26. Die Stirnseite 30 ist z. B. in einer Aussparung 44 des Abstützelements 26 vorgesehen.

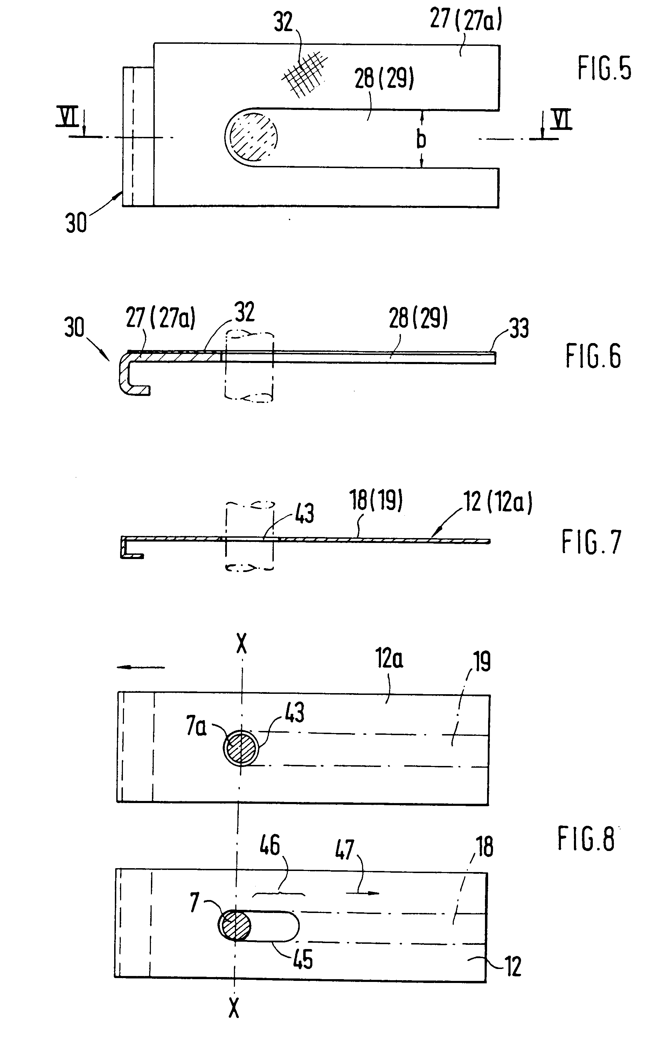

Jede Platte 12 und 12a zwischen den Elementen 27, 27a und 26 weist eine Bohrung 43 zum Durchstecken eines Verdrängungsbolzens 7 und 7a auf (Fig. 7). Die Bolzen 7, 7a umfassen jeweils eine mit der Lenkkonsole 8 verbundene erste Schraubbuchse 34, die durch die Bohrung 43 ragt und mit einer zweiten Schraubbuchse 35 über eine Befestigungsschraube 36 verbunden wird. Zwischen einem Bund 37 der zweiten Buchse 35 und dem bügelseitigen Abstützelement 26 ist eine durch eine Feder 21 belastete Scheibe 38 angeordnet, die an dem Abstützelement 26 gleitend anliegt. Die Vorspannung der Feder 21 ist so abgestimmt, daß sowohl die Lenkanlage gehalten wird als auch eine günstige Reibung zwischen den gleitenden Teilen des Deformationselementes 16 gewährleistet ist. Gleichzeitig dienen die Federn 21 zum Toleranzausgleich.

Sowohl zwischen den Führungselementen 27 und 27a und der Lenkkonsole 8 als auch zwischen der Scheibe 38 und dem Abstützelement 26 ist eine Gleitschicht 33 bzw. 40 z. B. aus Teflon vorgesehen. Insbesondere ist die Gleitschicht 40 auf der Scheibe 38 und die Gleitschicht 33 auf den Führungselementen 27 und 27a aufgebracht.

Wenn die Lenkwelle 1 mit dem Lenkschutzrohr 3 bei einem Crash in Pfeilrichtung Z bewegt wird, verschiebt sich der Bügel 6 mit dem Abstützelement 26 sowie die mit dem Bügel 6 verbundenen Führungselemente 27 und 27a und die Platten 12 und 12a relativ zu den feststehenden Verdrängungsbolzen 7 und 7a im Aufbauteil 8. Bei dieser Bewegung reißen die Bolzen 7, 7a die Platten 12 und 12a entlang der Verformungsabschnitte 18, 19 etwa im Bereich der Längsschlitze 28, 29 und 14, 15 auf, wobei die Breite b der oben liegenden Längsschlitze 28, 29 zu den mit größere Breite versehenen unteren Längsschlitzen 14, 15 einen entsprechenden Platz für den Materialfluß gewährleisten.

Die energieabsorbierenden Platten 12 und 12a können zur Erzielung eines definierten Deformationsverhaltens aus verschiedenen Materialien wie Aluminium, Kunststoff, Stahl usw. bestehen, wobei die Verformungsabschnitte im Bereich der Längsschlitze der Elemente mit Bohrungen, Schlitzen und dergleichen Ausnehmungen versehen sein können. Diese Anordnungen sind entweder symmetrisch oder unsymmetrisch entsprechend den gewünschten Verformungsverhalten ausgebildet.

Nach einer weiteren Ausführung können auch mehr als zwei Verdrängungsbolzen sowie diesen Bolzen zugeordnete energieabsorbierende Platten vorgesehen sein. So kann ein weiterer Verdrängungsbolzen z. B. Teil des Gleitsteines 41 sein.

Die Bolzen 7, 7a können im Zusammenwirken mit den Verformungsabschnitten 18, 19 zur abgestuften Energieabsorbtion und einer hieraus resultierenden Glättung der Kennlinien einen unterschiedlichen Beginn einer Verformung der Abschnitte 18, 19 bewirken. Zu diesem Zweck ist z.

B. der eine Bolzen 7 in einer Bohrung 43 der Platte 12a und der weitere Bolzen 7a in einem Langloch 45 der Platte 12 derart in einer Ebene X-X angeordnet, daß bei einem Beginn der Verschiebung von der Lenksäule, der Bolzen 7a einen Freiraum 46 vor sich aufweist, wie Fig. 8 näher zeigt, und der weitere Bolzen 7, eine Verformung beginnt.

**Patentansprüche**

1. Lenksäulenbefestigung für ein Kraftfahrzeug mit einem Deformationselement, das aus einer energieabsorbierenden Platte (12, 12a) besteht, die Verformungsabschnitte (18, 19) umfaßt, wobei diese Platte (12, 12a) auf der oberen Fläche eines von einem Bügel (6) des Lenkschutzrohrs (3) gebildeten Abstützelements (26) aufliegt und das Abstützelement (26) Längsschlitze (14, 15) aufweist, die sich parallel zum Lenkschutzrohr (3) erstrecken und die energieabsorbierende Platte (12, 12a) relativ zu dem Abstützelement (26) in Richtung der Längsschlitze (14, 15) des Abstützelements (26) fixiert ist und von Verdrängungsbolzen (7, 7a) durchgedrungen ist, die an der Lenkkonsole (8) befestigt und in den Längsschlitzen (14, 15) des Abstützelements (26) geführt sind, **dadurch gekennzeichnet,** daß die energieabsorbierenden Platten (12, 12a) zwischen dem unteren Abstützelement (26) des Bügels (6) und parallel dazu angeordneten oberen Führungselementen (27, 27a) angeordnet sind und die Platten (12, 12a) mit den Führungselementen (27, 27a) krallenartig abgewinkelt sind und ein stirnseitiges Ende (30) des bügelseitigen Abstützelements (26) umgreifen und die Führungselemente (27, 27a) sich an der Lenkkonsole (8) des Fahrzeugaufbaues (5) abstützen und Längsschlitze (28, 29) umfassen, die mit den weiteren Längsschlitzen (14, 15) des bügelseitigen Abstützelements (26) korrespondierend angeordnet sind, und die Elemente (27, 27a und 26) sich über die ganze Länge der plattenseitigen Verformungsabschnitte (18, 19) erstrecken und diese jeweils durch die Längsschlitze (28, 29 und 14, 15) seitlich begrenzt sind.

2. Lenksäulenbefestigung nach Anspruch 1, **dadurch gekennzeichnet,** daß die Platten (12 und 12a) aus einem Aluminium-Werkstoff bestehen.

3. Lenksäulenbefestigung nach den Ansprüchen 1 oder 2, **dadurch gekennzeichnet,** daß die Führungselemente (27 und 27a) an ihren der Lenkkonsole (8) zugerichteten Flächen (32) eine Gleitschicht (33) aufweisen.

**4.** Lenksäulenbefestigung nach einem der vorhergehenden Ansprüche, **dadurch gekennzeichnet,** daß der Verdrängungsbolzen (7, 7a) jeweils eine mit der Lenkkonsole (8) verbundene erste Schraubbuchse (34) umfaßt, die die energieabsorbierende Platte (12, 12a) durchdringt und mit einer zweiten Schraubbuchse (35) über eine Befestigungsschraube (36) verbunden ist.

**5.** Lenksäulenbefestigung nach Anspruch 4, **dadurch gekennzeichnet,** daß zwischen dem bügelseitigen Abstützelement (26) und einem Bund (37) der zweiten Schraubbuchse (35) eine federbelastete Scheibe (38) angeordnet ist, die am Abstützelement (26) gleitend anliegt.

**6.** Lenksäulenbefestigung nach Anspruch 5, **dadurch gekennzeichnet,** daß die Scheibe (38) an ihrer dem Abstützelement (26) zugerichteten Fläche (39) eine Gleitschicht (40) aufweist.

**7.** Lenksäulenbefestigung nach einem der vorhergehenden Ansprüche, **dadurch gekennzeichnet,** daß die unteren Längsschlitze (14, 15) im Abstützelement (26) des Bügels (6) breiter ausgeführt sind als die oberen Längsschlitze (28, 29) in den Führungselementen (27, 27a).

**8.** Lenksäulenbefestigung nach einem der vorhergehenden Ansprüche, **dadurch gekennzeichnet,** daß in einer der Platten (12 oder 12a) der Bolzen (7 oder 7a) in einem Langloch (45) geführt ist, das in Verformungsrichtung (47) einen Freiweg (46) aufweist, wogegen der andere Bolzen (7 oder 7a) in der Bohrung (43) angeordnet ist und beide Bolzen (7 und 7a) in einer gleichen Querebene (X-X) liegen.

**9.** Lenksäulenbefestigung nach einem der Ansprüche 5 bis 8, **dadurch gekennzeichnet,** daß die Federn (21) eine die Lenkanlage haltende und eine relativ geringe Reibung erzeugende definierte Vorspannung aufweisen.

**Claims**

**1.** A steering-column mounting for a motor vehicle, with a deformation member comprising an energy-absorbing plate (12, 12a) having deformation portions (18, 19), the said plate (12, 12a) resting on the upper face of a support member (26) formed by a bracket (6) of the steering protection tube (3) and the support member (26) having longitudinal slots (14, 15) extending parallel to the steering protection tube (3) and the energy-absorbing plate (12, 12a) being fixed relative to the support member (26) in the direction of the longitudinal slots (14, 15) of the support member (26) and being traversed by through bolts (7, 7a) secured to the steering bracket (8) and guided in the longitudinal slots (14, 15) of the support member (26), characterized in that the energy-absorbing plates (12, 12a) are arranged between the lower support member (26) of the bracket (6) and upper guide members (27, 27a) arranged parallel thereto, and the plates (12, 12a) with the guide members (27, 27a) are turned back in the manner of a claw and engage around a front end (30) of the support member (26) on the bracket and the guide members (27, 27a) are supported on the steering bracket (8) of the vehicle body (5) and surround longitudinal slots (28, 29) arranged corresponding to the further longitudinal slots (14, 15) of the support member (26) on the bracket, and the members (27, 27a and 26) extend over the entire length of the deformation portions (18, 19) on the plate and are each bounded laterally by the longitudinal slots (28, 29 and 14, 15).

**2.** A steering-column mounting according to Claim 1, characterized in that the plates (12 and 12a) consist of an aluminium material.

**3.** A steering-column mounting according to Claim 1 or 2, characterized in that the guide members (27, 27a) have a sliding layer (33) on their faces (32) towards the steering bracket (8).

**4.** A steering-column mounting according to one of the preceding Claims, characterized in that the through bolt (7, 7a) comprises a respective first screw sleeve (34) connected to the steering bracket (8) and extending through the energy-absorbing plate (12, 12a) and connected to a second screw sleeve (35) by way of a fastening screw (36).

**5.** A steering-column mounting according to Claim 4, characterized in that a spring-loaded disc (38) resting on the support member (26) on the bracket in a sliding manner is arranged between the support member (26) and a collar (37) of the second screw sleeve (35).

**6.** A steering-column mounting according to Claim 5, characterized in that the disc (38) has a sliding layer (40) on its face (39) towards the the support member (26).

**7.** A steering-column mounting according to one of the preceding Claims, characterized in that the lower longitudinal slots (14, 15) in the support member (26) of the bracket (6) are made wider than the upper longitudinal slots (28, 29) in the guide members (27, 27a).

8. A steering-column mounting according to one of the preceding Claims, characterized in that in one of the plates (12 or 12a) the bolt (7 or 7a) is guided in an elongate hole (45) having a free path (46) in the direction (47) of deformation, whereas the other bolt (7 or 7a) is arranged in the bore (43) and the two bolts (7 and 7a) lie in the same transverse plane (X-X).

9. A steering-column mounting according to one of Claims 5 to 8, characterized in that the springs (21) have a defined pre-stressing retaining the steering unit and producing a relatively low degree of friction.

**Revendications**

1. Fixation de colonne de direction d'un véhicule automobile, comportant un élément déformable qui est constitué d'une plaque (12, 12a), absorbant l'énergie et comprenant des parties déformables (18, 19), cette plaque (12, 12a) reposant sur la surface supérieure d'un élément d'appui (26), formé par un étrier (6) du tube de protection de direction (3) et l'élément d'appui (26) présentant des fentes longitudinales (14, 15) qui sont parallèles au tube de protection de direction (3) et la plaque (12, 12a) absorbant l'énergie étant fixée par rapport à l'élément d'appui (26) dans la direction des fentes longitudinales (14, 15) de l'élément d'appui (26) et étant traversée par des boulons de déplacement (7, 7a) qui sont fixés sur la console de direction (8) et qui sont guidés dans les fentes longitudinales (14, 15) de l'élément d'appui (26), caractérisée en ce que les plaques (12, 12a) absorbant l'énergie sont placées entre l'élément d'appui (26) inférieur de l'étrier (6) et des éléments de guidage (27, 27a) supérieurs parallèles à celui-ci et en ce que les plaques (12, 12a) avec les éléments de guidage (27, 27a) sont repliées à la manière de griffes et entourent une extrémité (30) frontale de l'élément d'appui (26) côté étrier et en ce que les éléments de guidage (27, 27a) prennent appui contre la console de direction (8) de la carrosserie (5) du véhicule et entourent des fentes longitudinales (28, 29) qui sont disposées en correspondance avec les autres fentes longitudinales (14, 15) de l'élément d'appui (26) côté étrier et en ce que les éléments (27, 27a et 26) s'étendent sur toute la longueur des parties déformables (18, 19) côté plaque et en ce que celles-ci sont délimitées chacune latéralement par les fentes longitudinales (28, 29 et 14, 15).

2. Fixation de colonne de direction selon la revendication 1, caractérisée en ce que les plaques (12 et 12a) sont réalisées dans un matériau à base d'aluminium.

3. Fixation de colonne de direction selon les revendications 1 ou 2, caractérisée en ce que les éléments de guidage (27 et 27a) présentent une couche de glissement (33) sur leurs surfaces (32) tournées vers la console de direction (8).

4. Fixation de colonne de direction selon les revendications précédentes, caractérisée en ce que le boulon de déplacement (7, 7a) comprend une première douille filetée (34) reliée à la console de direction (8) qui traverse la plaque (12, 12a) absorbant l'énergie et qui est reliée à une deuxième douille filetée (35), par une vis de fixation (36).

5. Fixation de colonne de direction selon la revendication 4, caractérisée en ce qu'il est placé entre l'élément d'appui (26) côté étrier et un épaulement (37) de la deuxième douille filetée (35), une rondelle (38) soumise à l'action d'un ressort qui s'applique par glissement contre l'élément d'appui (26).

6. Fixation de colonne de direction selon la revendication 5, caractérisée en ce que la rondelle (38) présente sur sa surface (39) tournée vers l'élément d'appui (26), une couche de glissement (40).

7. Fixation de colonne de direction selon l'une des revendications précédentes, caractérisée en ce que les fentes longitudinales (14, 15) inférieures, pratiquées dans l'élément d'appui (26) de l'étrier (6), sont plus larges que les fentes longitudinales supérieures (28, 29) pratiquées dans les éléments de guidage (27, 27a).

8. Fixation de colonne de direction selon l'une des revendications précédentes, caractérisée en ce que dans l'une des plaques (12 ou 12a), le boulon (7 ou 7a) est guidé dans un trou allongé (45) qui présente, dans la direction de déformation (47), un parcours libre (46), tandis que l'autre boulon (7 ou 7a) est placé dans le perçage (43) et les deux boulons (7 et 7a) se situent dans un même plan transversal (X-X).

**9.** Fixation de colonne de direction selon l'une des revendications 5 à 8, caractérisée en ce que les ressorts (21) présentent une pré-tension définie qui maintient la direction et qui produit une friction relativement réduite.

FIG.1

EP 0 295 378 B1

FIG.2

FIG.3

FIG.4

FIG.5

FIG.6

FIG.7

FIG.8